# EUROPÄISCHE PATENTSCHRIFT

(11) **EP 0 496 326 B1**
(45) Veröffentlichungstag und Bekanntmachung des Hinweises auf die Patenterteilung: **23.08.1995**
(21) Anmeldenummer: 92100863.7
(22) Anmeldetag: 20.01.1992
(51) Int. Cl.: F16D 48/02

(54) **Schleppertriebwerk mit überlastgeschützter Zapfwelle und Verfahren zum Überlastschutz eines Zapfwellenantriebes**
Tractor propulsion unit with overload protected power take off, and method for overload protection of a power take off drive
Ensemble d'entrainement de tracteur avec prise de force protégées contre des surcharges et méthode de protection contre des surcharges d'un entraînement de prise de force

(30) Priorität: 21.01.1991 DE 4101610
(43) Veröffentlichungstag der Anmeldung: 29.07.1992
(73) Patentinhaber: STEYR-DAIMLER-PUCH AKTIENGESELLSCHAFT, 1010 Wien (AT)
(72) Erfinder: Gartner, Helfried, A-3321 Ardagger Markt (AT)

(56) Entgegenhaltungen:
- DE-A- 2 910 365
- DE-A- 3 730 635
- FR-A- 2 313 680
- GB-A- 2 164 408

## Beschreibung

Die Erfindung handelt von einem Schleppertriebwerk mit Antriebswelle für Arbeitsgeräte mit Überlastschutz durch eine Kupplung, deren übertragbares Höchstmoment durch Einwirkung eines Steuergerätes auf den Beaufschlagungsdruck der Kupplung einstellbar ist.

Aus der DE-PS 29 10 365 ist es bekannt, in Schleppertriebwerken für den Antrieb der Zapfwelle eine Kupplung vorzusehen, deren Beaufschlagungsdruck in Abhängigkeit von der Belastbarkeit des jeweils anzutreibenden Arbeitsgerätes einstellbar ist. Dabei wird ein erstes übertragbares Höchstmoment durch Festlegung einer Grenztemperatur für die schleifende Kupplung eingestellt und ein zweites übertragbares Höchstmoment durch Festlegung eines Beaufschlagungsdruckes der Kupplung, der notfalls durch Betätigung eines Tastschalters überschritten werden kann. Die Festlegung der Grenztemperatur für das erste Höchstmoment und des Beaufschlagungsdruckes für das zweite Höchstmoment erfolgt durch eine elektrische Steckverbindung mit am Arbeitsgerät fest angebrachten Spannungsteilern.

Dieser Überlastschutz schützt bestenfalls das Arbeitsgerät, nicht aber den Schlepper selbst vor Überlastung und hat folgende Nachteile: die Festlegung des ersten Höchstmomentes durch eine Grenztemperatur setzt anhaltenden Schlupf der Kupplung voraus, was hohe Energieverluste und Verschleiß bedingt. Deshalb ist die Temperatur als Überlastkriterium ungeeignet und deren Messung wegen der Masse der Kupplung und wegen der Unvorhersehbarkeit von Wärmeleitung und Umgebungseinflüssen (Außentemperatur, Wind) überdies viel zu ungenau. Schließlich führt Überschreiten dieser unscharfen Schwelle ohne vorherige Warnung oder Auslösung von Gegenmaßnahmen zur Abschaltung.

Das zweite (höhere) übertragbare Höchstmoment ist zwar durch den Beaufschlagungsdruck definiert, doch dessen Einstellung ist nicht kontrollierbar. Kurzzeitiger Schlupf wird nicht angezeigt, starker Schlupf kann nur durch Betätigung des Notschalters abgestellt werden.

Durch die Steckverbindung mit den am Arbeitsgerät angeordneten Spannungsteilern ist zwar theoretisch sichergestellt, daß die richtigen Grenzwerte gegeben sind, doch nicht genau genug und nicht zuverlässig, da die Steckkontakte und die langen Leitungsverbindungen zwischen dem Steuergerät und dem Arbeitsgerät durch Schmutz und Beschädigungen die vorgegebenen Werte weiter verfälschen. Außerdem besteht keine Möglichkeit, die am Steuergerät tatsächlich zur Verfügung stehenden Grenzwerte zu überprüfen. Es ist aber wünschenswert, die Grenzwerte dem Erhaltungszustand des Arbeitsgerätes und der Größe des jeweiligen Schleppers optimal anpassen zu können. Schließlich muß der Hersteller des Anbaugerätes das Steuergerät des Traktorherstellers kennen, damit dieses den Spannungsteiler auch "versteht".

Es ist daher Ziel der Erfindung, diese Nachteile zu vermeiden, was erfindungsgemäß durch die Merkmale des ersten Anspruches erreicht wird.

Durch Bildung eines Schlupfsignales kann die Steuerung bei auftretendem Schlupf sofort Gegenmaßnahmen setzen. Die beiden durch den Beaufschlagungsdruck definierten und gestaffelten Höchstmomente ermöglichen zweckmäßige und abgestufte Gegenmaßnahmen. Die Einstellbarkeit dieser beiden Höchstmomente gibt dem Landwirt die Möglichkeit, die Grenzwerte bewußt nach eigener Erfahrung und Einschätzung optimal einzustellen. Der Summierverstärker sorgt dafür, daß das den Beaufschlagungsdruck stellende Signal bei Ansprechen des Schlupfwächters entsprechend verändert wird.

Das wird in vorteilhafter Weise dadurch erreicht, daß der Schlupfwächter auf den Setzeingang eines Flip-Flop geschaltet ist, dessen Ausgang einen Schalter im Summierverstärker betätigt, der das dem zweiten Höchstmoment entsprechende Signal aufschaltet. So ist die Momentenanpassung durch Anheben des Höchstmomentes besonders einfach zu erreichen, unter Vermeidung einer gleitenden Regelung, weil bei Erreichen des zweiten Höchstmomentes der Schlupfwächter ja doch wieder anspricht und ein Warnsignal auslöst.

Wenn das Ausgangssignal des Schlupfwächters weiters verzögert auf den Setzeingang eines zweiten Flip-Flop geschaltet ist, das den Notausschalter im Summierverstärker betätigt, ist die Überschreitung des zweiten Höchstmomentes mit minimalem Aufwand sicher und schnell unterbunden.

In einer bevorzugten Ausführungsform ist weiters ein Überlastschalter vorgesehen, dessen Betätigung ein dem Summierverstärker zugeführtes Signal auslöst, das eine weitere Erhöhung des Ausgangssignales bewirkt und gleichzeitig mit dem Rücksetzeingang des zweiten Flip-Flop verbunden ist. Dieser Überlastschalter gestattet in Situationen, in denen das Anbaugerät nicht abgeschaltet werden darf, eine weitere Erhöhung des Beaufschlagungsdruckes.

In Weiterbildung der Erfindung können die Stellorgange Drehpotentiometer sein, die mit einem Signalumformer verbunden sind, der die Kenndaten der Kupplung berücksichtigt. Dadurch brauchen die Stellorgane nicht geeicht zu sein und die Ausgangssignale des Signalumformers sind sowohl zur Wirkung auf den Summierverstärker als auch für die Anzeige der eingestellten Höchstmomente geeignet. Dabei können die Kenndaten in einer kostensparenden Verfeinerung in ansteckbaren Speichern enthalten sein.

In einer besonders vorteilhaften Ausbildung sind die Stellhebel mit Tastern vereinigt, die auf einen Anzeigeumschalter wirken, der die Ausgangssignale des Signalumformers einem Anzeigegerät zuleitet, wobei in der anderen Stellung des Anzeigeumschalters von demselben Anzeigegerät die von der Drehzahlmessereinrichtung ermittelten Drehzahlen angezeigt werden. Durch diese Mehrfachfunktion werden die Anzeigegeräte für die Drehzahl eingespart, ohne daß damit ein Nachteil verbunden wäre, weil man die Anzeige der Höchstmomente ja nur während des Einstellens und später nur kurzzeitig zur Überprüfung benötigt. Dabei erfolgt die Umschaltung gleichzeitig durch Betätigen des Stellhebels, was dem Bedienungskomfort zugute kommt.

Die Erfindung handelt weiters von einem Verfahren zum Überlastschutz für einen Schlepper mit über eine Antriebswelle antreibbaren Arbeitsgeräten mittels eines Steuergerätes, das auf den Beaufschlagungsdruck einer Kupplung wirkt.

Bei der Bedienung des in der DE-PS 29 10 365 beschriebenen Gerätes tappt der Fahrer völlig im Dunkeln: er weiß weder, welche Höchstmomente tatsächlich eingestellt sind, noch welches Moment im Augenblick übertragen wird und ob Schlupf auftritt oder nicht. Er hat auch, abgesehen von einem Tastschalter, keine Möglichkeit, in die Steuerung einzugreifen.

Es ist daher ein weiteres Ziel der Erfindung, auch das Arbeitsverfahren so zu verbessern, daß bei geringem apparativem Aufwand und bei voller Wahrung der Betriebssicherheit der Betrieb durch sinnfällige Maßnahmen optimiert werden kann.

Erfindungsgemäß wird das durch die folgende Vorgangsweise erreicht:
a) nach Inbetriebnahme des Gerätes wird der Beaufschlagungsdruck der Kupplung (3) auf einen vorbestimmten ersten Wert für das übertragbare Höchstmoment eingestellt,
b) während des Betriebs wird laufend der Schlupf zwischen dem treibenden Teil (4) und dem getriebenen Teil (5) der Kupplung (3) bestimmt und bei auftretendem Schlupf ein Schlupfsignal erzeugt,
c) bei Auftreten eines Schlupfsignals, d.h. bei Überschreiten des ersten Wertes für das übertragbare Höchstmoment, wird ein erstes Warnsignal (24) erzeugt und der Beaufschlagungsdruck der Kupplung (3) auf einen vorbestimmten zweiten Wert für das übertragbare Höchstmoment eingestellt, welcher über dem ersten Wert für das übertragbare Höchstmoment liegt,
d) tritt das Schlupfsignal erneut oder weiterhin für eine vorbestimmte Zeitspanne auf, d.h. wird der zweite Wert für das übertragbare Höchstmoment für eine vorbestimmte Zeitspanne überschritten, so wird die Kupplung (3) selbsttätig gelöst.

Dabei kann weiters das Warnsignal in Schritt c) durch Nachstellen des niedrigeren eingestellten Höchstmomentes abgestellt werden, womit es seinen Zweck, den Fahrer zur richtigen Korrekturmaßnahme zu zwingen, ideal erfüllt.

In Weiterbildung des Verfahrens wird vor Lösen der Überlastkupplung ein anderes Warnsignal ausgelöst und das Öffnen der Kupplung kann durch Betätigung eines Notschalters, der eine weitere Anhebung des übertragbaren Höchstmomentes bewirkt, verhindert werden. Mit Hilfe dieser Notvorrichtung können, wenn die automatische Abschaltung wegen Gefahr unzulässig ist, besondere Situationen gemeistert werden.

Die Erfindung wird im folgenden anhand von Abbildungen einer bevorzugten Ausführungsform beschrieben:
- Fig.1:: schematische Darstellung der erfindungsgemäßen Vorrichtung.
- Fig.2:: vergrößerte Darstellung des Steuergerätes mit dessen Peripherie.

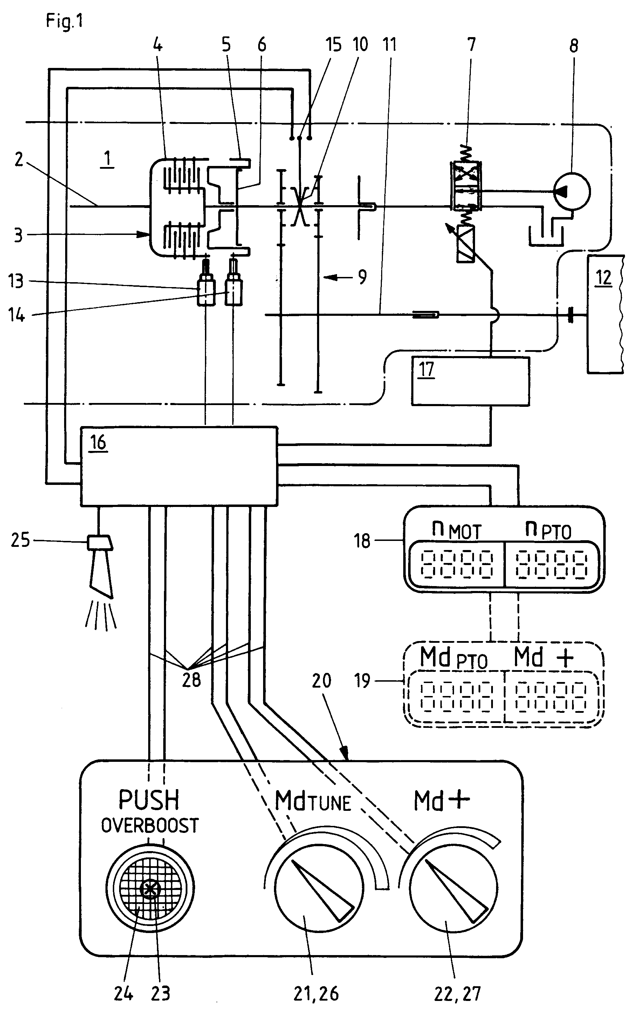

Der in Figur 1 abgebildete Teil des Schleppertriebwerkes 1 enthält eine als Schalt- oder Überlastkupplung ausgebildete Kupplung 3, deren treibender Teil 4 über eine Motorwelle 2 mit dem nicht dargestellten Antriebsmotor mit Motorkupplung des Schleppertriebwerkes 1 verbunden ist und einem getriebenen Teil 5, der über ein Untersetzungsgetriebe 9, das über eine Schaltklaue 10 geschaltet wird, mit der Antriebswelle 11 (Zapfwelle) verbunden ist, die zu einem summarisch mit 12 bezeichneten Arbeitsgerät führt. Das von der Kupplung 3 übertragbare Höchstdrehmoment wird beispielsweise durch Beaufschlagung eines Kolbens 6 mit Drucköl eingestellt, das von einer Ölpumpe 8 über ein Proportionalventil 7 geliefert wird.

Am treibenden Teil 4 und am getriebenen Teil 5 der Kupplung 3 ist je ein Drehzahlsensor 13,14 angeordnet, und an der Schaltklaue 10 ein Gangsensor 15. Die Ausgangssignale dieser drei Sensoren 13,14,15 werden einem Steuergerät 16 zugeführt, dessen Hauptausgangssignal auf ein Stellglied 17 wirkt, auf das auch ein nicht dargestellter Zapfwellenschalter wirken kann. Dieses Stellglied 17 steuert das Proportionalventil 7. Weiters ist an das Steuergerät 16 ein Anzeigegerät 18 für Motordrehzahl ("nMOT") und Zapfwellendrehzahl ("nPTO") und ein Anzeigegerät 19 für das eingestellte erste Höchstmoment ("MdPTO") und das zweite, höhere, Höchstmoment ("Md+") angeschlossen. Das zweite Anzeigegerät 19 ist nur strichliert eingezeichnet, weil es bei geeigneter Ausbildung des Steuergerätes 16 mit dem Anzeigegerät 18 vereinigt sein kann, und dann abwechselnd die Drehzahlen und die Höchstmomente anzeigt.

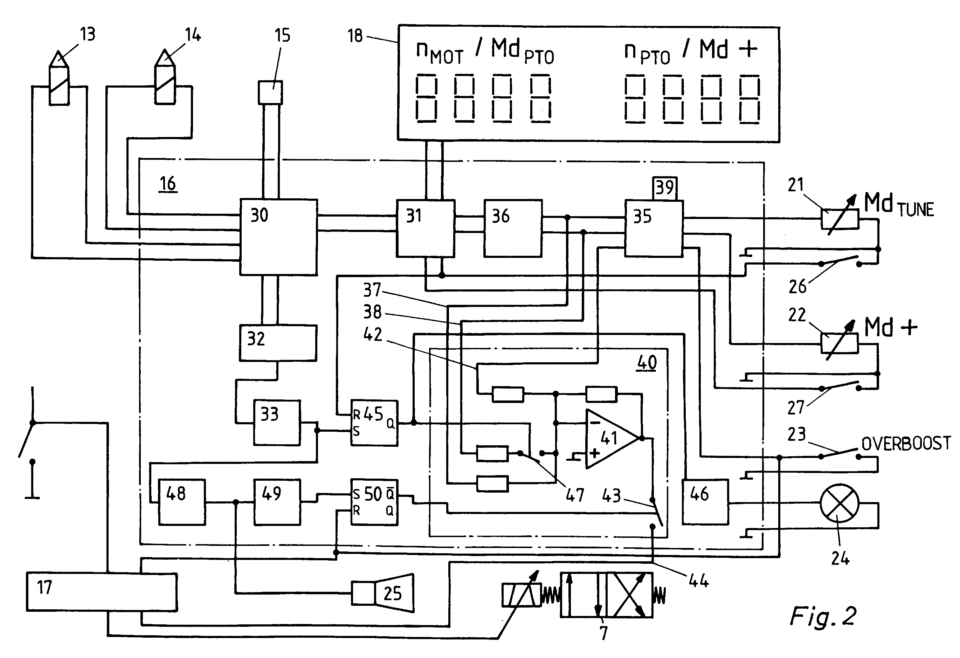

Eine Bedienungstafel 20, die vorzugsweise in das Armaturenbrett des Schleppers einbezogen ist, weist zwei Stellorgane 21,22 auf, die vorzugsweise als Drehpotentiometer ausgebildet sind, eines zur Einstellung des ersten Höchstmomentes ("MdTUNE") und eines zur Einstellung des zweiten Höchstmomentes ("Md+"). Die Stellorgane 21,22 sind mit Tastern 26,27 kombiniert, wie in der Beschreibung der Figur 2 erläutert. Weiters enthält die Bedienungstafel 20 eine Warnleuchte 24 und einen Überlastschalter 23 ("OVERBOOST"). Dieser ist beispielsweise mit der Warnleuchte 24 kombiniert oder die Warnleuchte ist im Überlastschalter angeordnet. Alle diese Organe der Bedienungstafel 20 sind über elektrische Leitungen 28 mit dem Steuergerät 16 verbunden, ebenso wie eine akustische Signaleinrichtung 25.

Fig.2 zeigt das Schaltbild einer bevorzugten Gestaltung des Steuergerätes 16 mit dessen Peripherie. Die Ausgangssignale der beiden Drehzahlsensoren 13,14 und des Gangsensors 15 werden einer Drehzahlmeßeinrichtung 30 zugeführt, deren Ausgangssignale einerseits über einen Anzeigeumschalter 31 dem Anzeigegerät 18 ("nMOT", "nPTO") und andererseits über einen Schlupfrechner 32 einem Schlupfwächter 33 zugeführt werden, auf dessen Wirkung später eingegangen wird.

Die Stellorgane 21,22 zur Einstellung des ersten und zweiten Höchstmomentes sind mit Tastern 26,27 kombinierte Einrichtungen zur Vorgabe von Sollwerten, vorzugsweise Drehpotentiometer, deren Ausgangssignale dem Signalumformer 35 zugeführt werden. Auch das Ausgangssignal des Überlastschalters 23 ("OVERBOOST") wird diesem Signalumformer 35 zugeführt. Er wandelt die den eingestellten Höchstmomenten entsprechenden Eingangssignale in Signale 37,38,42 um, die dem in der Kupplung 3 einzustellenden Beaufschlagungsdruck entsprechen. Die den eingestellten Höchstmomenten entsprechenden Signale 37,38 werden auch über ein Anzeige-Interface 36 und den Anzeigeumschalter 31 dem Anzeigegerät 18 zugeführt ("MdPTO", "Md+"). Bei Betätigung eines der Stellorgane 21,22 kann gleichzeitig auch der zugehörige Taster 26,27 betätigt werden, wodurch der Anzeigeumschalter 31 von Drehzahlanzeige auf Höchstmomentenanzeige umschaltet. Die Schaltung kann aber auch so abgewandelt sein, daß erst nach Drücken einer der Tasten 26,27 das jeweilige Potentiometer 21,22 verstellt werden kann.

Die umgeformten Signale 37,38,42 werden einem Summierverstärker 40 zugeführt, in dem sie auf den Eingang eines Operationsverstärkers 41 geschaltet sind. Der Ausgang des Operationsverstärkers 41 kann durch einen Notausschalter 43 unterbrochen werden uns ist über eine Leitung 44 mit dem Stellglied 17 verbunden, das beispielsweise über ein Proportionalventil 7 hydraulisch den Beaufschlagungsdruck der Kupplung 3 steuert, doch können auch andere als hydraulische Betätigungsmittel zur Steuerung des Beaufschlagungsdruckes vorgesehen sein.

Der Ausgang des Schlupfwächters 33 wirkt auf ein ersten Flip-Flop 45 und ein erstes Verzögerungsglied 48. Durch Ansprechen des Schlupfwächters 33 wird das erste Flip-Flop 45 gesetzt, wodurch der Schalter 47 im Summierverstärker geschlossen und dadurch das Höchstmoment vom ersten eingestellten Wert ("MdPTO") auf den zweiten eingestellten Wert ("Md+") erhöht wird. Zurückgesetzt wird das erste Flip-Flop 45 durch den Taster 26, der mit dem Stellorgan 21 vereinigt ist, was beim Nachstellen des ersten Höchstmomentes ("MdTUNE") automatisch erfolgt, soferne das übertragene Moment nicht bereits über "Md+" hinaus angestiegen ist.

Das Ausgangssignal des Schlupfwächters 33 wird weiters über zwei in Serie geschaltete Verzögerungsglieder 48,49 dem Setzeingang eines zweiten Flip-Flop 50 zugeführt, dessen invertiertes Ausgangssignal ein Öffnen des Notausschalters 43 bewirkt. Zurückgesetzt wird dieses zweite Flip-Flop 50 durch Betätigung des Überlastschalters 23 ("OVERBOOST"), wodurch die Notabschaltung unterbunden werden kann. Zwischen den beiden Verzögerungsgliedern 48,49 ist noch die akustisches Warneinrichtung 25 angeschlossen.

Im Betrieb wird das Steuergerät folgendermaßen bedient: nach Anbau des Arbeitsgerätes 12 werden die beiden Höchstmomente ("MdPTO", "Md+") eingestellt. Dazu wird der Drehschalter 21 ("MdTUNE") gedrückt und am Anzeigegerät 18 erscheint "MdPTO", sodaß während des Einstellens bei niedergedrücktem Drehschalter 21 und Taster 26 das eingestellte Höchstmoment direkt ablesbar ist. Sodann wird der Drehschalter 22 ("Md+") niedergedrückt, am Anzeigegerät 18 erscheint "Md+" (am besten in %), sodaß auch die gewünschte Drehmomentüberhöhung direkt anhand der Anzeige eingestellt werden kann.

Wenn im Betrieb eine Momentspitze auftritt, wird durch das Flip-Flop 45 das Blinklicht 24 eingeschaltet und im Summierverstärker auf das voreingestellte zweite Höchstmoment ("Md+") umgeschaltet. Dann muß durch Niederdrücken des Drehschalters 21 mit dem Taster 26 das Blinklicht gelöscht werden. Wenn sich das Blinklicht 24 auf diese Weise nicht löschen läßt, wird das erste Höchstmoment ("MdPTO") durch Drehen des Schalters 21 ("MdTUNE") nachreguliert, bis das Blinklicht 24 erlischt.

Wenn auch das zweite voreingestellte Höchstmoment ("Md+") überschritten wird, ertönt nach kurzer Zeit (in Verzögerungsglied 48 eingestellt) ein akustisches Warnsignal 25 und nach einer weiteren kurzen Zeit (Verzögerungsglied 49) wird die Kupplung 3 gelöst. Nun kann der Fahrer die Ursache des hohen Momentanstieges beheben und dann den Betrieb wieder aufnehmen.

In gefährlichen Situationen (z.B. Arbeit mit der Seilwinde im Forstbetrieb) kann das Lösen der Kupplung durch Drücken des Überlastschalters 23 (OVERBOOST) unterbunden werden, solange dieser Schalter gedrückt bleibt. Dann wird das maximal mögliche Moment übertragen, gegebenenfalls bis zum Abwürgen des Motors.

Diese Funktionsbeschreibung läßt erkennen, wie sehr ein erfindungsgemäßes Schleppertriebwerk bzw. das erfindungsgemäße Verfahren, das natürlich auch sequentiell mittels eines Mikroprozessors oder Mikrocomputers ausgeführt werden kann, dem Bedürfnis nach einer flexiblen, bedienungsfreundlichen und trotzdem sicheren Überlastschutzvorrichtung entgegenkommt.

## Patentansprüche

1. Schleppertriebwerk mit Antriebswelle (11) für Arbeitsgeräte (12) mit Überlastschutz durch eine mit Drucköl betätigte Kupplung (3), deren übertragbares Höchstmoment durch Einwirkung eines Steuergerätes (16) auf den Beaufschlagungsdruck der Kupplung (3) einstellbar ist,
**gekennzeichnet durch**:
a) am treibenden Teil (4) und am getriebenen Teil (5) der Kupplung (3) angeordnete Drehzahlsensoren (13,14), deren Ausgangssignale einer Vorrichtung (30,32,33) zur Erzeugung eines Schlupfsignals zugeführt sind,
b) ein erstes variables Stellorgan (21) zur Einstellung eines ersten Signals (37), welches einem ersten übertragbaren Höchstmoment entspricht,
c) ein zweites variables Stellorgan (22) zur Einstellung eines zweiten Signals (38), welches einem zweiten übertragbaren Höchstmoment entspricht, dessen Wert über dem ersten übertragbaren Höchstmoment liegt,
d) einen Summierverstärker (40),
d1) dessen erstem Summiereingang das dem ersten Höchstmoment entsprechende Signal (37) zugeführt ist und dessen zweiten Summiereingang das dem zweiten Höchstmoment entsprechende Signal (38) zugeführt ist, wobei zumindest der zweite Summiereingang mittels eines in Abhängigkeit vom Schlupfsignal steuerbaren Schalters (47) aktivierbar und desaktivierbar ausgebildet ist, und
d2) dessen Ausgang mit einem Eingang eines den Beaufschlagungsdruck der Kupplung (3) einstellenden Stellgliedes (17) verbunden ist und in dessen Ausgangssignalleitung ein Notausschalter (43) angeordnet ist.

2. Schleppertriebwerk nach Anspruch 1, **dadurch gekennzeichnet**, daß die Vorrichtung zur Erzeugung eines Schlupfsignals aus einer Drehzahlmeßeinrichtung, einem Schlupfrechner (32) und einem Schlupfwächter (33) besteht und daß das Ausgangssignal des Schlupfwächters (33) auf den Setzeingang eines ersten Flip-Flop (45) geschaltet ist, dessen Ausgang den steuerbaren Schalter (47) des Summierverstärkers (40) ansteuert.

3. Schleppertriebwerk nach Anspruch 2, **dadurch gekennzeichnet**, daß der Notausschalter (43) als steuerbarer Schalter ausgebildet ist und daß das Ausgangssignal des Schlupfwächters (33) über mindestens ein Verzögerungsglied (48,49) auf den Setzeingang eines zweiten Flip-Flop (50) geschaltet ist, dessen Ausgang mit dem Steuereingang des Notausschalters (43) im Summierverstärker (40) verbunden ist.

4. Schleppertriebwerk nach Anspruch 3, **dadurch gekennzeichnet**, daß ein Überlastschalter (23) (OVERBOOST) vorgesehen ist, dessen Betätigung ein dem Summierverstärker (40) an einem dritten Summiereingang zugeführtes Signal (42) auslöst, das eine weitere Erhöhung des Ausgangssignals (44) bewirkt und gleichzeitig mit dem Rücksetzeingang des zweiten Flip-Flop (50) verbunden ist.

5. Schleppertriebwerk nach einem der Ansprüche 1 bis 4, **dadurch gekennzeichnet**, daß die Stellorgane (21,22) Drehpotentiometer sind, die mit einem Signalumformer (35) verbunden sind, der die Signale (37,38,42) unter Berücksichtigung der Kenndaten der Kupplung (3) erzeugt.

6. Schleppertriebwerk nach einem der Ansprüche 1 bis 5, **dadurch gekennzeichnet**, daß die Stellorgane (21,22) mit Tastern (26,27) vereinigt sind, die auf einen Anzeigeumschalter (31) wirken, der die Ausgangssignale (37,38) des Signalumformers (35) einem Anzeigegerät (18) zuleitet, wobei in der anderen Stellung des Anzeigeumschalters (31) von demselben Anzeigegerät (18) die von einer Drehzahlmeßeinrichtung (30) ermittelten Drehzahlen angezeigt werden.

7. Schleppertriebwerk nach Anspruch 5 oder 6, **dadurch geknennzeichnet**, daß ein die Kenndaten der Kupplung (3) enthaltender austauschbarer Datenspeicher (39) vorhanden ist.

8. Verfahren zum Überlastschutz für einen Schlepper mit über eine Antriebswelle antreibbaren Arbeitsgeräten mittels eines Steuergerätes zur Steuerung des Beaufschlagungsdruckes einer Kupplung **gekennzeichnet durch** folgende Schritte:
a) nach Inbetriebnahme des Gerätes wird der Beaufschlagungsdruck der Kupplung (3) auf einen vorbestimmten ersten Wert für das übertragbare Höchstmoment eingestellt,
b) während des Betriebs wird laufend der Schlupf zwischen dem treibenden Teil (4) und dem getriebenen Teil (5) der Kupplung (3) bestimmt und bei auftretendem Schlupf ein Schlupfsignal erzeugt,
c) bei Auftreten eines Schlupfsignals, d.h. bei Überschreiten des ersten Wertes für das übertragbare Höchstmoment, wird ein erstes Warnsignal (24) erzeugt und der Beaufschlagungsdruck der Kupplung (3) auf einen vorbestimmten zweiten Wert für das übertragbare Höchstmoment eingestellt, welcher über dem ersten Wert für das übertragbare Höchstmoment liegt,
d) tritt das Schlupfsignal erneut oder weiterhin für eine vorbestimmte Zeitspanne auf, d.h. wird der zweite Wert für das übertragbare Höchstmoment für eine vorbestimmte Zeitspanne überschritten, so wird die Kupplung (3) selbsttätig gelöst.

9. Verfahren zum Überlastschutz für einen Schlepper mit über eine Antriebswelle antreibbaren Arbeitsgeräten mittels eines Steuergerätes zur Steuerung des Beaufschlagungsdruckes einer Kupplung **gekennzeichnet durch** folgende Schritte:
a) nach Inbetriebnahme des Gerätes wird der Beaufschlagungsdruck der Kupplung (3) auf einen vorbestimmten ersten Wert für das übertragbare Höchstmoment eingestellt,
b) während des Betriebs wird laufend der Schlupf zwischen dem treibenden Teil (4) und dem getriebenen Teil (5) der Kupplung (3) bestimmt und bei auftretendem Schlupf ein Schlupfsignal erzeugt,
c) bei Auftreten eines Schlupfsignals, d.h. bei Überschreiten des ersten Wertes für das übertragbare Höchstmoment, wird ein erstes Warnsignal (24) erzeugt und der Beaufschlagungsdruck der Kupplung (3) auf einen vorbestimmten zweiten Wert für das übertragbare Höchstmoment eingestellt, welcher über dem ersten Wert für das übertragbare Höchstmoment liegt,
d) tritt das Schlupfsignal erneut oder weiterhin für eine vorbestimmte Zeitspanne auf,d.h. wird der zweite Wert für das übertragbare Höchstmoment für eine vorbestimmte Zeitspanne überschritten, so wird ein zweites Warnsignal (25) ausgelöst und
d1) die Kupplung (3) nach Ablauf einer weiteren vorbestimmten Zeitspanne selbsttätig gelöst oder
d2) im Fall einer durch das Lösen der Kupplung drohenden Gefahr wird durch Betätigen eines Notschalters (23) das Lösen der Kupplung (3) verhindert, wobei gleichzeitig eine weitere Anhebung des übertragbaren Höchstmomentes bewirkt wird.

10. Verfahren nach Anspruch 8 oder 9, **dadurch gekennzeichnet**, daß bei Überschreiten des ersten Wertes für das Übertragbare Höchstmoment das erste Warnsignal (24) durch Erhöhen des niedrigeren eingestellten Höchstmomentes gelöscht wird.

11. Verfahren nach Anspruch 8, 9 oder 10, **dadurch gekennzeichnet**, daß bei Erhöhung des ersten Wertes für das Übertragbare Höchstmoment gleichzeitig der Wert für das zweite übertragbare Höchstmoment um den selben Betrag erhöht wird.

## Claims

1. Drive train for an agricultural tractor comprising a drive-shaft (11) for driving working implements, with overloading protection by a pressure-oil operated coupling (3), the maximum transmittable torque of the coupling being adjustable by means of a control unit (16) acting on the oil pressure actuating the coupling,
**caracterized** by:
a) the driving part (4) and the driven part (5) of the coupling (3) being provided with rotational speed sensors (13,14) whose output signals are furnished to a unit (30,32,33) for generating a slip-signal,
b) a first regulating switch (21) for adjusting the value of a first signal (37) corresponding to a first maximum transmittable torque,
c) a second regulating switch (22) for adjusting the value of a second signal (38) corresponding to a second maximum transmittable torque, superior to the first maximum transmittable torque,
d) a summing amplifier (40),
d1) whose first summing input port receives the signal (37) corresponding to the first maximum transmittable torque and whose second summing input port receives the signal (38) corresponding to the second maximum transmittable torque, at least the second summing port being activated or desactivated by a switch (47) operated depending on the slip signal, and
d2) whose output port is connected to the input port of a control element (17) modulating the actuating pressure of the coupling (3) and an emergency switch (43) is provided in the output port connection.

2. Drive train for an agricultural tractor according to claim 1, **caracterized** in that the unit for generating a slip signal comprises a rotating speed measuring device (30), a slip calculator (32) and a slip monitor (33) and that the output signal of the slip monitor (33) is connected to the set input port of a first flip-flop (45), the output of which actuates the switch (47) of the summing amplifier (40).

3. Drive train for an agricultural tractor according to claim 2, **caracterized** in that the emergency switch (43) is a controllable switch and in that the output signal of the slip monitor (33) is connected to the set input port of a second flip-flop (50) via at least one time delay device (48,49), the output port of the second flip-flop being connected with the control input port of the emergency switch (43) in the summing amplifyier (40).

4. Drive train for an agricultural tractor according to claim 3, **caracterized** by an overload switch (23) (OVERBOOST) for triggering a signal (42) furnished to a third summing input port of the summing amplifier (40), the signal (42) leading to a further increase of the output signal (44), and to the reset inlet port of the second flip-flop (50).

5. Drive train for an agricultural tractor according to any of the claims 1 to 4, **caracterized** in that the regulating switches (21,22) are rotary potentiometers connected to a signal converter (35) generating the signals (37,38,42) taking account of the caracteristic data of the coupling (3).

6. Drive train for an agricultural tractor according to any of the claims 1 to 5, **caracterized** in that the regulating switches (21,22) are united with keys (26,27) actuating a display switch (31) connecting the output signals (37,38) from the signal converter (35) to a display (18), the same display showing the speeds determined by the rotating speed measuring device (30) in the other position of the display switch (31).

7. Drive train for an agricultural tractor according to claim 5 or 6, **caracterized** in that the caracteristic data of the coupling are stored in an exchangeable memory (39).

8. Process for the protection against overload for a tractor with working implements driven by means of a drive shaft, by a control unit acting on the oil pressure actuating a coupling, **caracterized** by the following steps:
a) when startig to operate the implement, the actuating pressure of the coupling (3) is adjusted for a predetermined first value of the maximum transmittable torque,
b) during operation, the slip between driving part (4) and driven part (5) of the coupling (3) is monitored and a slip signal is generated whenever slip occurs,
c) when a slip signal occurs, i.e. if the first value of the maximum transmittable torque is exceeded, a first warning signal (24) is generated and the actuating pressure of the coupling (3) is adjusted for a predetermined second value of the maximum transmittable torque, the second value being superior to the first value of the maximum transmittable torque,
d) if the slip signal occurs again or persists, i.e. the second value for the maximum transmittable torque is exceeded for a predetermined period of time, the coupling (3) is automatically disengaged.

9. Process for the protection against overload for a tractor with working implements driven by means of a drive shaft, by a control unit acting on the oil pressure actuating acoupling, **caracterized** by the following steps:
a) when startig to operate the implement, the actuating pressure of the coupling (3) is adjusted for a predetermined first value of the maximum transmittable torque,
b) during operation, the slip between driving part (4) and driven part (5) of the coupling (3) is monitored and a slip signal is generated whenever slip occurs,
c) when a slip signal occurs, i.e. if the first value of the maximum transmittable torque is exceeded, a first warning signal (24) is generated and the actuating pressure of the coupling (3) is adjusted for a predetermined second value of the maximum transmittable torque, the second value being superior to the first value of the maximum transmittable torque,
d) if the slip signal occurs again or persists, i.e. the second value for the maximum transmittable torque is exceeded for a predetermined period of time, a second warning signal (25) is generated and
d1) the coupling (3) is automatically disengaged after a further predetermined period of time, or
d2) in case disengaging the coupling would be dangerous, the coupling (3) can be prevented from disengagement by operating the emergency switch (23), a further increase of the maximum transmittable torque being effected at the same time.

10. Process according to any of the claims 8 9, **caracterized** in that the first warning signal (24) is terminated by increasing the lower of the predetermined maximum torques, when the first value of the maximum transmittable torque is exceeded.

11. Process according to any of the claims 8,9 or 10, **caracterized** in that with increase of the first value of the maximum transmittable torque, the value of the second maximum transmittable torque is increased by the same amount.

## Revendications

1. Mécanisme d'entrainement d'un tracteur agricole comportant un arbre d'entrainement (11) pour machines de travail (12) avec protection contre la surcharge par moyen d'un accouplement (3) actionné par huile sous pression, dont le couple maximal transmettable est susceptible d'être réglé par un dispositif de réglage (16) agissant sur la pression d'engagement de l'accouplement (3),
**caractérisé** par:
a) des capteurs de nombre de tours (13,14) de l'élément menant (4) et de l'élément mené (5) de l'accouplement (3) dont les signaux de sortie sont fournis à un dispositif de génération d'un signal représentatif du glissement (30,32,33),
b) un premier commutateur variable (21) destiné à prédéterminer la valeur d'un premier signal (37) représentatif d'un premier couple maximal transmettable,
c) un second commutateur variable (21) destiné à prédéterminer la valeur d'un second signal (38) représentatif d'un second couple maximal transmis supérieur au premier,
d) un amplificateur additif (40),
d1) à la première entrée d'addition duquel est fourni le signal (37) représentatif du premier couple maximum transmettable et à la seconde entrée d'addition duquel est fourni le signal (38) représentatif du second couple maximal transmettable, au moins la seconde entrée étant susceptible d'être activée oubien désactivée par moyen d'un commutateur (47) réglable en fonction du signal de glissement, et
d2) dont la sortie est reliée à l'entrée d'un organe de commande (17) règlant la pression d'engagement de l'accouplement (3) et dont la conduite de signal de sortie comporte un commutateur d'urgence (43).

2. Mécanisme d'entrainement d'un tracteur selon la revendication 1, **caractérisé** en ce que le dispositif de génération d'un signal représentatif du glissement comporte un arrangement de mésure de nombre de tours (30), un calculateur de glissement (32) et un avertisseur de glissement (33), et que le signal de sortie de l'avertisseur de glissement (33) est fourni à l'entrée de pilotage d'une première bascule bistable (45), dont la sortie est reliée au commutateur (47) réglable de l'amplificateur additif (40).

3. Mécanisme d'entrainement d'un tracteur selon la revendication 2, **caractérisé** en ce que le commutateur d'urgence (43) est un commutateur réglable et que la conduite du signal de sortie de l'avertisseur de glissement (33) est reliée à l'entrée de pilotage d'une seconde bascule bistable (50) par l'intermédiaire d'au moins un temporisateur (48,49), la sortie de la seconde bascule bistable étant reliée à l'entrée de commande du commutateur (47) réglable de l'amplificateur additif (40).

4. Mécanisme d'entrainement d'un tracteur selon la revendication 1, **caractérisé** en ce que un commutateur de surcharge (23) (OVERBOOST) est prévu dont l'actionnement déclenche un signal (42) fourni à une troisième entrée de l'amplificateur additif (40), ce signal ayant comme effect une augmentation ultérieure du signal de sortie (44), et en mème temps étant communiqué à l'entrée de remise de la seconde bascule bistable (50).

5. Mécanisme d'entrainement d'un tracteur selon la revendication 1, **caractérisé** en ce que les commutateurs variables (21,22) sont des potentiomètres rotatifs reliés à un transformateur de signal (35) qui génère les signaux (37,38,42) en fonction des donnés caractéristiques de l'accouplement.

6. Mécanisme d'entrainement d'un tracteur selon la revendication 1, **caractérisé** en ce que les commutateurs variables (21,22) sont combinés avec des touches (26,27) agissant sur un commutateur d'affichage (31) dirigeant les signaux de sortie (37,38) provenant du transformateur de signal (35) vers un dispositif indicateur (18), tandis que dans l'autre position du commutateur d'affichage (31), le mème dispositif indicateur (18) affiche les nombres de tours déterminés par l'arrangement de mésure de nombre de tours (30).

7. Mécanisme d'entrainement d'un tracteur selon la revendication 1, **caractérisé** en ce que une mémoire de données échangeable (39) contient les données caractéristiques de l'accouplement.

8. Procédé de protection contre la surcharge d'un tracteur avec machine de travail entrainée par intermédiaire d'un arbre d'entrainement, moyennant un dispositif de réglage agissant sur la pression d'engagement de l'accouplement, **caractérisé** par les pas suivants:
a) Après mise en service de la machine de travail, la pression d'engagement de l'accouplement (3) est mise au point à une première valeur prédeterminée du couple maximum transmettable,
b) quand la machine de travail est en service, le glissement entre l'élément menant (4) et l'élément mené (5) de l'accouplement (3) est détérminée en permanence et un signal de glissement est généré quand un glissement se produit,
c) quand un glissement se produit, c'est à dire quand la première valeur du couple maximum transmettable est dépassée, un premier signal avertisseur (24) est émis et la pression d'engagement de l'accouplement (3) est mise au point à une seconde valeur prédéterminée du couple maximum transmettable, cette seconde valeur étant supérieure à la première valeur du couple maximum transmettable,
d) si le signal de glissement se produit de nouveau oubien toujours pour une période prédéterminée, c'est à dire quand la seconde valeur prédéterminé du couple maximum transmettable est dépassée pour une période prédéterminée, l'accouplement est automatiquement debrayé.

9. Procédé de protection contre la surcharge d'un tracteur avec machine de travail entrainée par intermédiaire d'un arbre d'entrainement, moyennant un dispositif de réglage agissant sur la pression d'engagement de l'accouplement, **caractérisé** par les pas suivants:
a) Après mise en service de la machine de travail, la pression d'engagement de l'accouplement (3) est reglée à une première valeur prédeterminée du couple maximum transmettable,
b) quand la machine de travail est en service, le glissement entre l'élément menant (4) et l'élément mené (5) de l'accouplement (3) est détérminée en permanence et un signal de glissement est généré quand un glissement se produit,
c) quand un glissement se produit, c'est à dire quand la première valeur du couple maximum transmettable est dépassée, un premier signal avertisseur (24) est émis et la pression d'engagement de l'accouplement (3) est réglée à une seconde valeur prédéterminée du couple maximum transmettable, cette seconde valeur étant supérieure à la première valeur du couple maximum transmettable,
d) si le signal de glissement se produit de nouveau oubien toujours pour une période prédéterminée, c'est à dire quand la seconde valeur prédéterminée du couple maximum transmettable est dépassée pour une période prédéterminée, un second signal avertisseur (25) est émis et
d1) l'accouplement (3) est automatiquement debrayé après une période prédéterminée ultérieure, oubien
d2) quand le débrayage de l'accouplement serait dangéreux, le débrayage de l'accouplement est empêché par opération d'un commutateur de surcharge (23), ainsi effectuant une augmentation ultérieure du couple maximum transmettable.

10. Procédé selon l'une des revendications 8 ou 9, **caractérisé** en ce que le premier signal avertisseur (24) est terminé par augmentation du couple maximum transmettable inférieur quand la première valeur du couple maximum transmettable est dépassée.

11. Procédé selon l'une des revendications 8, 9 ou 10, **caractérisé** en ce que la seconde valeur du couple maximum transmettable est augmentée par la mème valeur que la première, quand la première valeur du couple maximum transmettable est augmentée.
